# EUROPÄISCHE PATENTSCHRIFT

(11) **EP 2 586 285 B1**
(45) Veröffentlichungstag und Bekanntmachung des Hinweises auf die Patenterteilung: **01.02.2017**
(21) Anmeldenummer: 12181311.7
(22) Anmeldetag: 22.08.2012
(51) Int. Cl.: A01D 41/127, G01N 21/35

(54) **LANDWIRTSCHAFTLICHE ERNTEMASCHINE**
AGRICULTURAL HARVESTER
MOISSONNEUSE AGRICOLE

(30) Priorität: 27.10.2011 DE 102011054841
(43) Veröffentlichungstag der Anmeldung: 01.05.2013
(73) Patentinhaber: CLAAS Selbstfahrende Erntemaschinen GmbH, 33428 Harsewinkel (DE)
(72) Erfinder: Claussen, Frank, 33428 Harsewinkel (DE)

(56) Entgegenhaltungen:
- EP-A1- 1 053 671
- EP-A1- 1 384 398
- EP-A1- 1 892 520
- WO-A1-99/46971
- DE-U1-202008 011 744

## Beschreibung

Die Erfindung betrifft eine landwirtschaftliche Erntemaschine gemäß dem Oberbegriff des Patentanspruchs 1.

Landwirtschaftliche Erntemaschinen fördern und verarbeiten Erntegut. Aus unterschiedlichen Gründen ist es von Interesse, das durch die Maschine geförderte Erntegut im laufenden Erntebetrieb auf dessen Eigenschaften zu untersuchen wie beispielsweise auf dessen Feuchte und/oder dessen Gehalt an Stärke/Zucker, Proteinen, Rohfasern, Öl, Mineralstoffen, Rohasche etc..

Auf für sich bekannte Weise lässt sich die Untersuchung eines Erntegutstroms mittels einer auf Basis der Nahinfrarot (NIR)-Spektroskopie arbeitenden Messeinrichtung durchführen. Aus dem Stand der Technik bekannte Messeinrichtungen weisen dazu eine am Erntegutstrom angeordnete optische Erfassungseinheit auf, die vom Erntegut (das mit einer Lichtquelle bestrahlt wird) reflektiertes Licht erfasst. Eine damit signalverbundene Auswerteeinheit mit einem Strahlendetektor analysiert das Spektrum des erfassten Lichts, um daraus Eigenschaften des Ernteguts abzuleiten. Derartig arbeitende Messeinrichtungen, wie beispielsweise für selbstfahrende Feldhäcksler auf dem Markt erhältlich, sind als kompakte in einem Gehäuse abgeschlossene Baugruppe ausgeführt und werden zweckmäßigerweise in unmittelbarer Nähe zum Gutfluss angebracht. Bei Feldhäckslern dient als Anbringungsort für das Gehäuse der Messeinrichtung herkömmlich die Außenwand der Überladeeinrichtung (auch als "Auswurfkrümmer" bezeichnet). Beispielhaft sei dazu auf die EP 1 570 723 B1 verwiesen, die eine an die Überladeeinrichtung eines Feldhäckslers anbringbare Halterungsanordnung für eine mit Nahinfrarot-Spektroskopie arbeitende Messeinrichtung beschreibt.

Die in der EP 1 570 723 B1 beschriebene Bauweise weist verschiedene Nachteile auf. So sind die für die Detektion des Infrarotlichts erforderlichen Sensoren im Betrieb starken Vibrationen bzw. Beschleunigungen ausgesetzt, die durch vorbeiströmendes Erntegut und/oder durch auf die Überladeeinrichtung übertragene betriebsbedingte Maschinenschwingungen bzw. -beschleunigungen verursacht werden. Insbesondere bei Fahrt durch unebenes Gelände wirken sich diese an der Überladeeinrichtung aufgrund von Hebelwirkung (mit zunehmendem Abstand von der Maschine) besonders stark aus und können im Extremfall hörbar als Schläge wahrgenommen werden. Die Haltbarkeit der empfindlichen Sensoren ist daher eingeschränkt. Weiterhin erfordert die Unterbringung der Sensoren einen nicht unerheblichen Bauraum, der an der Außenwand der Überladeeinrichtung nur unter dem Kompromiss einer nicht optimalen Positionierung bereitgestellt werden kann. Weiterhin besteht bei der Bauform der Messeinrichtung ein erhöhtes Risiko von Diebstählen, da die Messeinrichtung aufgrund deren Hochwertigkeit und leichten Demontierbarkeit begehrtes Diebesgut darstellt.

Aus der WO 99/46971 A1 ist ein Mähdrescher mit einer im Kornelevatorkopf angeordneten Messkammer bekannt, welcher zu untersuchendes Erntegut zuführbar ist. Der Messkammer ist ein optischer Sensor zugeordnet. Der Sensor steht über ein Glasfaserkabel mit einem Monochromator in Verbindung. Der Monochromator ist in der Kabine des Mähdreschers angeordnet.

Es ist daher eine Aufgabe der vorliegenden Erfindung eine Erntemaschine der eingangs genannten Art anzugeben, deren Messeinrichtung bei verbesserter Platzierungsmöglichkeit eine höhere Haltbarkeit aufweist. Zudem soll die Anordnung der Messeinrichtung diebstahlsicher sein.

Die Aufgabe wird gelöst durch eine Erntemaschine mit den Merkmalen des Patentanspruchs 1. Demnach zeichnet sich diese dadurch aus, dass die Auswerteeinheit der Messeinrichtung an einer Position der Erntemaschine angeordnet ist, welche von mechanischer Beanspruchung durch den Gutstrom und/oder sonstige betriebsbedingte Beschleunigungen weitestgehend entkoppelt ist, und über zumindest einen Lichtleiter mit der Erfassungseinheit verbunden ist. Zur genauen Positionierung der Erfassungseinheit relativ zum Gutstrom sowie zur Erzeugung eines qualitativ gut auswertbaren Messsignals sind Mittel vorgesehen, mit denen sich der Abstand und/oder die Ausrichtung der optischen Erfassungseinheit gegenüber dem zu untersuchenden Gutstrom einstellen lässt. Der Verschleiß an mit dem Erntegut in Kontakt geratenden Komponenten der Erfassungseinheit und die Beeinflussung des Gutstroms durch in diesen hineinragende Komponenten können so minimiert werden. Die Erfassungseinheit könnte dazu beispielsweise über Stellschrauben und/oder Distanzelemente abstandsund winkelveränderlich an einer Erntegut führenden Komponente (beispielsweise einem Gutleitblech) der Erntemaschine angebracht sein.

Hauptfunktionskomponenten der Messeinrichtung, insbesondere deren optische Erfassungseinheit und deren Auswerteeinheit, lassen sich örtlich voneinander trennen. Gemäß dem damit realisierten abgesetzten Aufbau ist dabei nur noch die optische Erfassungseinheit - zur erforderlichen Anbindung an den Ernteprozess - in der Nähe des Erntegutstroms angeordnet und damit erhöhter mechanischer Beanspruchung ausgesetzt. Die Auswerteeinheit mit den empfindlichen Sensoren zur spektralen Analyse wird dagegen an einer örtlich von der Erfassungseinheit entfernten Position der Erntemaschine angeordnet, wo mangels störender mechanischer Einflüsse ein sicherer Betrieb gewährleistet ist.

Durch Unterbringung der Auswerteeinheit beispielsweise in oder an einer Fahrerkabine oder einem Wartungsraum der Erntemaschine liegt eine mechanisch weitestgehend entkoppelte Positionierung vor, die neben einer einfachen Zugänglichkeit für einen Bediener vorteilhaft gewährleistet, dass sich die Messeinrichtung im verschlossenen Zustand der Maschine nicht stehlen lässt. Zur Gewährleistung einer zuverlässigen Auswertung des erfassten Lichtspektrums ist erfindungsgemäß die Auswerteeinheit über einen Lichtleiter mit der Erfassungseinheit verbunden. Hierdurch ergibt sich der Vorteil, dass in Gutstromnähe lediglich eine optische Erfassung des Ernteguts stattzufinden hat, wobei das erfasste Messsignal (das Lichtspektrum) weitestgehend störungsfrei durch den Lichtleiter in die sichere Umgebung der Auswerteeinheit abgeleitet wird. Die zuvor genannte Aufgabe wird damit gelöst.

Gemäß einer vorteilhaften Weiterbildung der Erntemaschine ist die Erfassungseinheit als separate Baugruppe ausgeführt, die an eine Erntegut führende Komponente der Erntemaschine montierbar ist. Sämtliche Komponenten der Erfassungseinheit sind demnach zu einer gemeinsam montierbaren Baugruppe zusammengefasst. Es ergibt sich der Vorteil, dass die Baugruppe so an unterschiedlichen Erntegut führenden Komponenten sowie an unterschiedlichen Positionen der Erntemaschine angebaut werden kann. Die Anbauposition kann demnach auch nachträglich verändert werden. Zu Wartungs- oder Reparaturzwecken ist eine schnelle Demontage der Erfassungseinheit möglich.

Vorteilhaft weist die Erfassungseinheit eine bevorzugt im Nahinfrarotlichtbereich arbeitende Beleuchtungsquelle, die zur Beleuchtung des vorbeiströmenden Ernteguts dient, und eine Optik zur Lenkung von vom Erntegut reflektierten Licht in den Lichtleiter auf, wobei der Lichtleiter das reflektierte Licht zu einem in der Auswerteeinheit angeordneten Detektor lenkt. Mittels des Detektors lässt sich das reflektierte Licht spektroskopisch analysieren. In der Erfassungseinheit können zur intensiveren Ausleuchtung und/oder aus Redundanzzwecken auch mehrere Beleuchtungsquellen vorgesehen sein.

Zur Gewährleistung zuverlässiger Messungen über längere Zeiträume ist der Erfassungseinheit vorteilhaft zumindest ein Referenzobjekt zugeordnet, das zur Kalibrierung der Messeinrichtung dient. Ein solches Referenzobjekt kann beispielsweise einen Weißstandard umfassen, der zur internen Kalibrierung der Auswerteeinheit in den Strahlengang einbringbar ist, wobei während der Kalibrierung vom Referenzobjekt reflektiertes Licht durch die Erfassungseinheit und den Lichtleiter auf den Detektor der Auswerteeinheit gelenkt wird. Eine Schwarzreferenz kann beispielsweise durch Ausschalten der sonst (im Betrieb) angeschalteten Lichtquelle erzeugt werden.

Der Lichtleiter dient primär zur Lichtübertragung von der Erfassungseinheit zur Auswerteeinheit und umfasst vorzugsweise eine oder mehrere Glasfasern. Da die Erfassungseinheit bevorzugt auch eine Beleuchtungsquelle und/oder eine Einrichtung zur Einbringung des Referenzobjekts aufweist, benötigt die Erfassungseinheit eine Stromversorgung. Eine vorteilhafte Weiterbildung der Erntemaschine sieht vor, dass der zumindest eine Lichtleiter zusammen mit elektrischen Leitern zur Stromversorgung und/oder Ansteuerung der Erfassungseinheit in einem gemeinsamen Kabel geführt ist. Der Verbund in einem gemeinsamen Kabel bietet insbesondere bei einer Anbringung der Erfassungseinheit an einer bewegbaren Maschinenkomponente (beispielsweise einer Überladeeinrichtung) den Vorteil einer kompakteren und sicheren Handhabung der Leitungsträger im Betrieb.

Insbesondere bei Anbringung der Erfassungseinheit an einer bewegbaren Maschinenkomponente (beispielsweise einer dreh- bzw. höhenverstellbaren Überladeeinrichtung) kann auf weiterhin vorteilhafte Weise vorgesehen sein, dass ein den Lichtleiter auf nehmendes Kabel zumindest in einem mechanisch besonders hoch beanspruchten Abschnitt von einer Schutzeinrichtung umgeben ist. Eine solche Schutzeinrichtung dient unter anderem als Knickschutz und/oder Quetschschutz des zumeist knickempfindlichen Lichtleiters.

Aufgrund der vorgesehenen abgesetzten Bauweise der Messeinrichtung, d.h. der örtlichen Trennung von Erfassungs- und Auswerteeinheit, kann gemäß einer vorteilhaften Ausgestaltung der Erfindung vorgesehen sein, dass die Messeinrichtung mehrere optische Erfassungseinheiten umfasst, die über je zumindest einen Lichtleiter mit einer gemeinsamen Auswerteeinheit verbunden sind. Demnach könnte eine Auswerteeinheit gleichzeitig (oder im Parallelbetrieb) mit mehreren örtlich unterschiedlich angeordneten Erfassungseinheiten genutzt werden. Für eine entsprechende gemeinsame Nutzung der Auswerteeinheit wäre gegebenenfalls eine Signalweiche oder ein sogenannter Multiplexer notwendig, um aus einer dann vorliegenden Mehrzahl von Eingängen das jeweils gewünschte Signal auszuwählen. Die mehreren Erfassungseinheiten könnten in Bezug auf den Erntegutstrom nacheinander und/oder parallel zueinander angeordnet sein. Mit einer Nacheinander-Anordnung der Erfassungseinheiten könnte das Erntegut beispielsweise zu unterschiedlichen Bearbeitungsstadien innerhalb der Erntemaschine untersucht werden. Eine parallele Anordnung - in Bezug auf den Erntegutstrom - könnte beispielsweise zu Redundanzwecken erwünscht sein und/oder könnte bedingt durch eine höhere untersuchte Oberfläche des Ernteguts die Zuverlässigkeit der Messergebnisse erhöhen, indem beispielsweise jede Erfassungseinheit je einen Teil des Erntegutstroms optisch erfasst.

Alternativ oder ergänzend könnte vorgesehen sein, dass an die Auswerteeinheit eine "bordfremde" Erfassungseinheit anschließbar ist, also beispielsweise eine stationäre bzw. ganz allgemein eine von der Erntemaschine separate Erfassungseinheit. Auf diese Weise könnte die an Bord der Erntemaschine angeordnete Auswerteeinheit vorteilhaft auch zur Untersuchung beispielsweise von Erntegutproben außerhalb der Erntemaschine genutzt werden. Zu den genannten Zwecken ist es vorteilhaft, die Auswerteeinheit mit Anschlüssen für mehrere Erfassungseinheiten zu versehen.

Die Messeinrichtung der Erntemaschine arbeitet primär nach dem Prinzip der Infrarot-Spektroskopie. Die Funktion der Messeinrichtung könnte jedoch vorteilhaft erweitert sein, indem der Erfassungseinheit zusätzlich eine Kamera zur optischen Erfassung des Ernteguts und zur Bilderzeugung zugeordnet ist. Das so erfasste Kamerabild könnte beispielsweise an einen Maschinenbediener über eine Anzeige ausgegeben werden, so dass vom Bediener - neben der spektroskopischen Auswertung - auch eine optische Sichtkontrolle stattfinden kann. Auf diesem Wege könnten auch Verschmutzungen der Optik - z.B. durch anhaftendes Erntegut - leicht erkannt werden, die leicht zu Verfälschungen der Messergebnisse führen können. Durch eine elektronische Bildauswertung könnte die Auswertung automatisiert erfolgen.

Eine bevorzugte Weiterbildung der Erfindung sieht vor, dass die Auswerteeinheit mit einem Nahinfrarotdetektor ausgestattet ist, wobei dieser Detektor wiederum mit einer Analyse- und Steuereinrichtung verbunden ist, die zur Auswertung der Spektren sowie zur Steuerung der Erfassungseinheit dient. Eine Anordnung der Auswerteeinheit in der Fahrerkabine oder im Wartungsraum der Erntemaschine sind denkbar. Bei Anordnung in der Fahrerkabine ergibt sich der Vorteil eines einfachen Zugriffs auf die Komponenten durch den Fahrer sowie einer einfachen Anbindung an bereits in der Kabine vorhandene Peripherie (beispielsweise Anzeige- und Bedienelemente und/oder an ein vorhandenes Maschinensteuerungssystem). Zudem ist der Diebstahl deutlich erschwert. Weiterhin ist eine Anbringung außerhalb der Kabine denkbar, indem die Auswerteeinheit beispielsweise von außen an der Fahrerkabine befestigbar ist. Da die Fahrerkabine in der Regel schwingungsgedämpft gegenüber der übrigen Maschine gelagert ist, wird so eine vorteilhafte Entkopplung der Auswerteeinheit von betriebsbedingten Schwingungen erreicht, ohne dass Bauraum der Fahrerkabine in Anspruch genommen wird.

Die Erfindung ist grundsätzlich an unterschiedlichen Erntemaschinen anwendbar, bei denen die Untersuchung eines Erntegutstroms von Interesse ist. Es kann sich beispielsweise um einen Mähdrescher, Mähwerk, Schwader, Wender, Ladewagen, eine Ballenpresse etc. handeln, wobei in jeder der Maschinen - auf unterschiedliche Weise - Erntegut gefördert wird und eine Untersuchung des Ernteguts auf dessen Eigenschaften eine Rolle spielt.

Von hoher praktischer Bedeutung erweist sich die Verwendung an einem selbstfahrenden Feldhäcksler. Insbesondere wenn dieser mit einer Überladeeinrichtung ausgestattet ist, lässt sich eine Untersuchung des die Maschine verlassenden Ernteguts vorteilhaft erzielen, indem die Erfassungseinheit an einer Außenwand der Überladeeinrichtung angeordnet ist, um durch einen in der Außenwand vorgesehenen Durchgang vom Erntegut reflektiertes Licht zu erfassen. Durch die erfindungsgemäß vorgesehene abgesetzte Bauweise lässt sich die Erfassungseinheit aufgrund deren gegenüber dem Stand der Technik verkleinerten Bauform/-gewicht dabei in einem weit von der Maschine abgewandten Bereich der Überladeeinrichtung positionieren. Die Untersuchung führt so zu besonders guten Ergebnissen, da das Erntegut mit zunehmendem Abstand zur Maschine langsamer und daher optisch einfacher zu erfassen ist. Weiterhin sind aufgrund der (mit steigender Entfernung von der Maschine) abnehmenden Krümmung der Überladeeinrichtung die Reibungskräfte des Ernteguts an der Außenwand geringer, so dass an der zur Erfassung nötigen Optik ein geringerer Verschleiß und eine geringere Verschmutzung durch das Erntegut anfällt.

Gemäß einer weiteren, insbesondere im Hinblick auf Wartung und Reparatur vorteilhaften Weiterbildung der Erfindung für den Einsatz an einem Feldhäcksler ist vorteilhaft die Auswerteeinheit von einem Betriebszustand, in dem diese an der Fahrerkabine befestigt ist, unter Beibehaltung der Verbindung mit der Erfassungseinheit in einen Wartungszustand bringbar, in dem diese an der Überladeeinrichtung befestigt ist. Bei dieser Ausgestaltung ist die Auswerteeinheit also sowohl in einem Betriebszustand als auch in einem an der Überladeeinrichtung befestigten Wartungszustand über den Lichtleiter mit der Erfassungseinheit verbunden. Muss beispielsweise zu Wartungs-, Reparatur- oder Montagezwecken die Überladeeinrichtung von der übrigen Maschine demontiert oder wieder an diese angebaut werden, so kann dies im Wartungszustand erfolgen, wobei die an der Überladeeinrichtung angebrachte Erfassungseinheit einschließlich Lichtleiter und vorübergehend daran befestigter Auswerteeinheit in Verbindung bleiben können. D.h. eine Trennung der Lichtleiterverbindung zwischen Erfassungs- und Auswerteeinheit ist während des Ausbaus der Überladeeinrichtung nicht erforderlich. Nach dem Einbau der Überladeeinrichtung an die Maschine kann die Auswerteeinheit wieder in deren Betriebszustand gebracht werden, d.h. an der Fahrerkabine befestigt werden, ohne dass die Lichtleiterverbindung wiederhergestellt werden muss.

Die Erfindung wird im Folgenden unter Hinweis auf die beigefügten Figuren anhand eines Ausführungsbeispiels näher erläutert. In den Figuren zeigen:
- Fig. 1: eine schematische Seitenansicht eines erfindungsgemäßen selbstfahrenden Feldhäckslers,
- Fig. 2: eine schematische Detailansicht einer am Feldhäcksler gemäß Fig. 1 angebauten Erfassungseinheit in Schnittdarstellung.

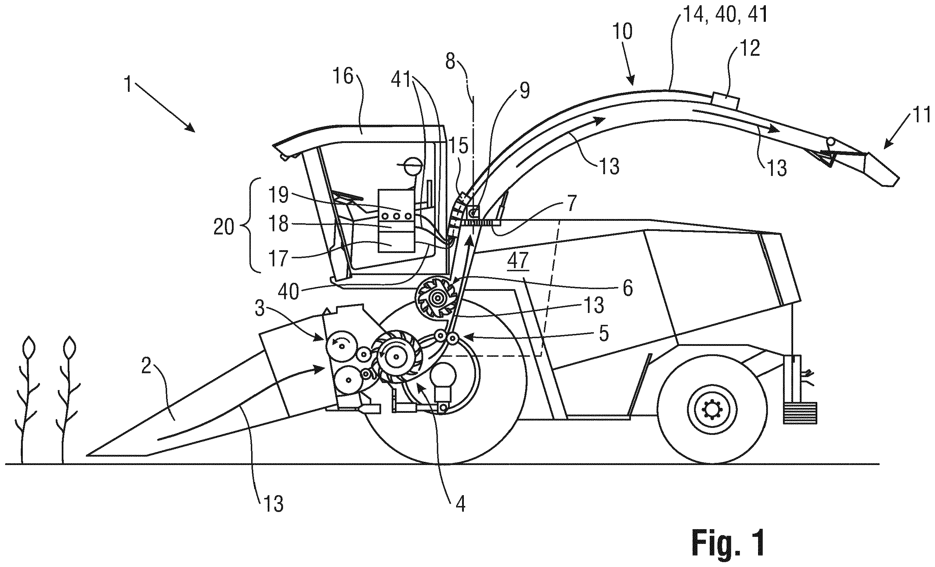

Fig. 1 zeigt in schematischer Seitenansicht eine erfindungsgemäße Erntemaschine, bei der es sich um einen selbstfahrenden Feldhäcksler 1 handelt. Der Feldhäcksler 1 ist zur Erntefahrt über ein Feld mit Vorder- und Hinterrädern ausgestattet und wird über eine Motoreinheit angetrieben. Im Erntebetrieb mäht der Feldhäcksler 1 mittels eines Erntevorsatzgeräts 2 Pflanzenbestand (angedeutet im linken Bildbereich) vom Feld und führt diesen in Form eines Erntegutstroms 13, angedeutet durch Pfeile entlang der Förderrichtung des Ernteguts 13, nachgelagerten Arbeits- und Förderorganen des Feldhäckslers 1 zu, um anschließend in einen nicht gezeigten Transportbehälter ausgeworfen zu werden.

Vom Erntevorsatzgerät 2 gelangt das Erntegut 13 zunächst zu einem Einzugsaggregat 3, von wo es nach einer Vorpressung durch Einzugswalzenpaare einem Häckselaggregat 4 zugeführt wird. Unter Zusammenwirkung einer rotierenden, mit Messern bestückten Häckseltrommel und einer feststehenden Gegenschneide wird das Erntegut zerkleinert (gehäckselt) und gelangt durch einen von unterhalb einer Fahrerkabine 16 aufsteigenden Förderschacht durch eine Konditioniereinrichtung 5 und einen Nachbeschleuniger 6 in eine Überladeeinrichtung 10, die eine Bogenform aufweist, zum Auswurf des Ernteguts 13 durch eine Auswurfklappe 11 dient und daher auch als Auswurfkrümmer bezeichnet wird. Die Überladeeinrichtung 10 ist mittels eines antreibbaren Drehkranzes 7 um eine vertikale Achse 8 gegenüber dem Maschinenrahmen des Feldhäckslers 1 drehbar und lässt sich mittels eines Hubzylinders um eine horizontale Drehachse 9 in der Höhe verschwenken. Erfindungsgemäß ist der Feldhäcksler 1 mit einer nachfolgend näher zu beschreibenden Messeinrichtung zur Untersuchung des Ernteguts 13 auf dessen Eigenschaften wie beispielsweise Feuchte und/oder Gehalte von Stärke/Zucker, Proteinen, Rohfasern, Öl, Mineralstoffen, Rohasche etc. ausgestattet.

Die an dem Feldhäcksler 1 vorgesehene Messeinrichtung umfasst im Wesentlichen eine optische Erfassungseinheit 12, die in unmittelbarer Nähe zum Erntegutstrom 13 an einer Außenwand der Überladeeinrichtung 10 angebracht ist, und eine von der mechanischen Beanspruchung durch den Gutstrom entkoppelte in der Fahrerkabine 16 angeordnete Auswerteeinheit 20, die über einen in einem Kabel 14 geführten Lichtleiter 40 mit der Erfassungseinheit 12 verbunden ist. Die Erfassungseinheit 12 ist als abgeschlossene Baugruppe in ein Gehäuse integriert ausgeführt und so auf einfache Weise an der Überladeeinrichtung 10 montier- bzw. demontierbar. Wie der Fig. 1 zu entnehmen, ist die Erfassungseinheit 12 an einer Position der Überladeeinrichtung 10 angeordnet, die der maschinenabgewandten Auswurfklappe 11 näher ist als dem Ansatz der Überladeeinrichtung 10 am Drehkranz 7. Die Überladeeinrichtung 10 weist in diesem Bereich nur noch eine zu vernachlässigende Krümmung auf.

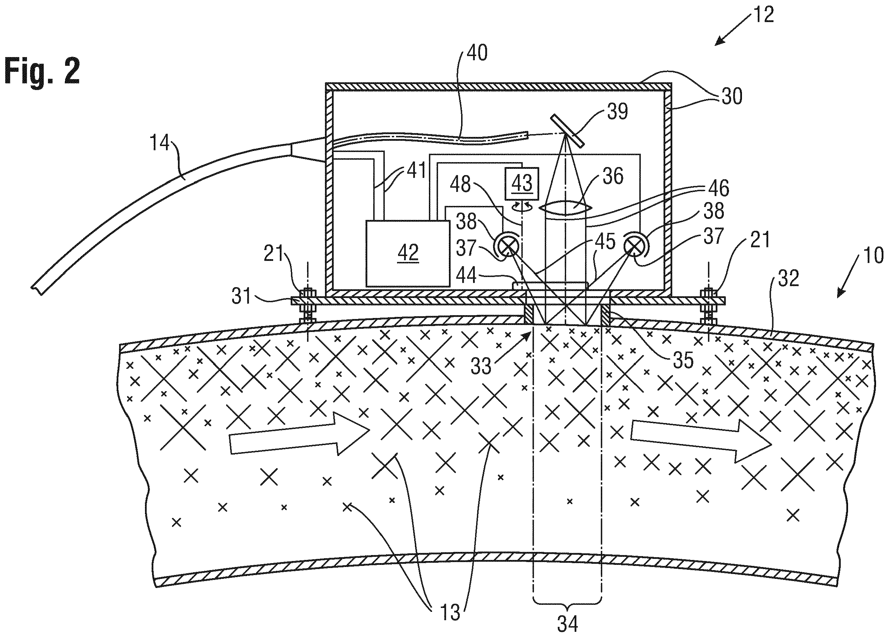

Zur näheren Erläuterung des Aufbaus und der Funktion der Erfassungseinheit 12 sei auf Fig. 2 verwiesen, die eine schematische Detailansicht der an die Überladeeinrichtung 10 montierten Erfassungseinheit 12 im Seitenschnitt ist. Dargestellt ist ein freigeschnittener Abschnitt der Überladeeinrichtung 10. Demnach ist an einer Außenwand 32 der Überladeeinrichtung 10 ein Durchgang 33 ausgebildet. Durch die Überladeeinrichtung 10 gefördertes Erntegut 13 wird entsprechend der eingezeichneten Pfeilrichtung unmittelbar an diesem Durchgang 33 vorbei gefördert.

Die Erfassungseinheit 12 ist in geeigneter Weise an diesem Durchgang 33 angeordnet und ausgebildet, um vom Erntegut 13 reflektiertes Licht zu erfassen. Dazu weist die Erfassungseinheit 12 ein Gehäuse 30 auf, das an einer Grundplatte 31 befestigt ist. Die Grundplatte 31 wird mittels einer Verstelleinrichtung 21 gegenüber der Außenwand 32 der Überladeeinrichtung 10 gehalten, so dass sich die gesamte Erfassungseinheit 12 in deren Abstand und Ausrichtung gegenüber der Überladeeinrichtung 10 verstellen lässt. Dies ermöglicht eine für die Messung erforderliche genaue Justierung eines Reflexionsbereichs 34, der an der Oberfläche des Erntegutstroms 13 entsteht.

Das Gehäuse 30 der Erfassungseinheit 12 nimmt eine Optik auf, die im Wesentlichen aus einem Tubus 35, einer Linse 36, einer Umlenkeinrichtung 39 sowie zwei Lichtquellen 37 (vorzugsweise Infrarotlichtquellen) mit zugehörigem Reflektor 38 umfasst. Mittels der Verstelleinrichtung 21 lässt sich die Abstandslage der Erfassungseinheit 12 gegenüber der Außenwand 32 so einstellen, dass der Tubus 35 das vorbeiströmende Erntegut 13 möglichst wenig beeinträchtigt und so nur geringem Verschleiß ausgesetzt ist.

Die Lichtquellen 37 sind bezogen auf einen mittigen Strahleneintritt in die Linse 36 spiegelsymmetrisch angeordnet und so ausgerichtet, dass ein unmittelbar unterhalb des Tubus 35 liegender Reflexionsbereich 34 an der Oberfläche des Erntegutstroms 13 jeweils etwa aus einem Winkel von 45° mit Infrarotlicht 45 bestrahlt wird.

Vom Erntegut 13 im Reflexionsbereich 34 reflektiertes Licht 46 wird durch die Linse 36 gebündelt, um nach Ablenkung in einer Umlenkeinrichtung 39 (Spiegel oder Prisma) in einen Lichtleiter 40 einzutreten. Die Umlenkeinrichtung 39 verringert die Bauhöhe des Gehäuses 30, indem das reflektierte Licht 46 in einer Richtung in den Lichtleiter 40 eintritt, die parallel zur lösbaren Rückwand des Gehäuses 30 ist.

Weiterhin ist im Gehäuse 30 ein Steuergerät (mit Spannungsversorgung) 42 untergebracht. Hierdurch werden zunächst die beiden Lichtquellen 37 mit Strom versorgt. Daneben wird hierdurch ein Stellmotor 43 angesteuert, der nach Bedarf ein Referenzobjekt 44 zur Kalibrierung der Messeinrichtung in den Strahlengang der Optik ein- und ausschwenken kann. Das Referenzobjekt ist dazu um eine Stellachse 48 des Motors 43 drehbar und weist beispielsweise einen Weiß- oder Schwarzstandard auf. Ein beliebig anders gestalteter Antrieb zum Ein- und Ausbringen des Referenzobjekts 44 in den Strahlengang ist denkbar. Beispielsweise könnte durch ein vorgesehenes Winkelgetriebe zwischen Stellmotor 43 und Referenzobjekt 44 der Bauraum des Gehäuses 30 weiter verkleinert werden. Alternativ könnte ein Referenzobjekt so angeordnet sein, dass es ohne die Notwendigkeit einer mechanischen Bewegung dauerhaft im erfassten Strahlengang liegt.

Während der Kalibrierung der Messeinrichtung wird anstatt oder ergänzend zum Erntegut 13 das Referenzobjekt 44 mit Infrarotlicht 45 bestrahlt, so dass beispielsweise vom Weißstandard ein bekanntes Strahlenspektrum reflektiert und durch die Linse 36, die Umlenkeinrichtung 39 und den Lichtleiter 40 zur Auswerteeinheit 20 gelenkt wird, um eine Kalibrierung vorzunehmen.

Das Steuergerät (mit Spannungsversorgung) 42 ist über elektrische Leiter 41 mit der Auswerteeinheit 20 verbunden, um mit Spannung versorgt zu werden und - beispielsweise zur Durchführung einer Kalibrierung - in Signalkontakt mit der Auswerteeinheit 20 zu stehen.

Der Lichtleiter 40 und die elektrischen Leiter 41 sind außerhalb des Gehäuses 30 in einem gemeinsamen Kabel 14 untergebracht. Bevorzugt lässt sich dieses Kabel 14 mit einer geeigneten Kupplung (nicht gezeigt) vom Gehäuse 30 abziehen bzw. daran anstecken, wodurch eine Montage und Demontage der Erfassungseinheit 12 bei angebautem Kabel 14 an die Überladeeinrichtung 10 möglich ist.

Wie Fig. 1 zeigt, verläuft das Kabel 14 einschließlich integriertem Lichtleiter 40 und elektrischen Leitern 41 von der Erfassungseinheit 12 entlang der Überladeeinrichtung 10 zunächst zum Ansatz der Überladeeinrichtung 10 im Bereich des Drehkranzes 7. Um Dreh- und Höhenbewegungen der Überladeeinrichtung 10 um die vertikale Achse 8 bzw. die horizontale Achse 9 zu ermöglichen, weist das Kabel 14 in diesem Bereich ausreichendes Spiel auf und ist bevorzugt mit einer flexiblen Schutzeinrichtung 15 umgeben, die unter Gewährleistung der Beweglichkeit der Überladeeinrichtung 10 das Kabel 14 vor Knicken, Quetschen und/oder Zugspannung in diesem Bereich schützt.

Im Weiteren verläuft das Kabel 14 durch eine Durchführung in der Rückwand der Fahrerkabine 16 zur dort angeordneten Auswerteeinheit 20. Alternativ könnte die Auswerteeinheit 20 zumindest teilweise in einem durch gestrichelte Linien angedeuteten Wartungsraum 47 hinter dem Nachbeschleuniger 6 bzw. der Konditioniereinrichtung 5 angeordnet sein.

Gemäß dem gezeigten Ausführungsbeispiel umfasst die Auswerteeinheit 20 einen Detektor 17 für Infrarotlicht, eine Analyse- und Steuereinrichtung 18 sowie eine Bedienund Anzeigeinrichtung 19. Der Detektor 17 empfängt über den Lichtleiter 40 das von der Erfassungseinheit 12 übermittelte Lichtspektrum und detektiert dessen spektralen Bestandteile. Die Analyse- und Steuereinrichtung 18 ist mit dem Detektor 17 verbunden und kann unter anderem durch Vergleich mit Referenzdaten die Feuchte und/oder den Gehalt an bestimmten Inhaltsstoffen (Stärke/Zucker, Proteine, Rohfasern, Öl, Mineralstoffe, Rohasche etc.) im Erntegut 13 ermitteln.

Eine mit der Analyse- und Steuereinrichtung 18 verbundene Bedien- und Anzeigeeinrichtung 19 ist ebenfalls in der Fahrerkabine 16 angeordnet und dient als Benutzerschnittstelle für einen Maschinenbediener. Auf einer zugeordneten Anzeige werden beispielsweise aktuelle Messwerte für einzelne Inhaltstoffe oder sonstige Messinformationen angezeigt. Über Bedieneinrichtungen lassen sich Einstellungen aller Art vornehmen, insbesondere lässt sich eine Kalibrierung manuell auslösen.

Die beschriebene Erntemaschine weist den Vorteil auf, dass deren Messeinrichtung aufgrund der schwingungs- bzw. bewegungsentkoppelten Unterbringung der Auswerteeinheit 20 wenig störanfällig ist. Aufgrund der abgesetzten Bauweise kann die Erfassungseinheit 12 mit geringem Gewicht und kleiner Bauform ausgeführt werden, so dass eine für die Qualität der Messung vorteilhafte Anordnung nahe des maschinenabgewandten Endes der Überladeeinrichtung 10 möglich ist. Da die hinsichtlich deren Einzelkomponenten wertvolle Auswerteeinheit 20 an sicherem Ort in der Fahrerkabine 16 oder in einem Wartungsraum 47 angeordnet ist, wird ein Diebstahl deutlich erschwert.

Es sei darauf hingewiesen, dass im Rahmen der Erfindung - abweichend vom gezeigten Ausführungsbeispiel - auch mehrere Erfassungseinheiten mit einer gemeinsamen Auswerteeinheit zusammenarbeiten können, welche beispielsweise an unterschiedlichen Stellen des durch die Maschine geförderten Gutstroms angeordnet sein können. Auch ist der Anschluss einer "bordfremden" Erfassungseinheit an die Auswerteeinheit möglich, um so beispielsweise Erntegutproben stationär zu untersuchen. Eine dabei zu verwendende Erfassungseinheit kann aufgrund der Nutzung der Auswerteeinheit an Bord der Erntemaschine in vorteilhafter Weise verhältnismäßig klein und leicht ausgeführt werden, so dass diese einfach zu handhaben ist.

**Bezugszeichenliste**

| | | | |
|---|---|---|---|
| 1 | Feldhäcksler | 30 | Gehäuse |
| 2 | Erntevorsatzgerät | 31 | Grundplatte |
| 3 | Einzugsaggregat | 32 | Außenwand |
| 4 | Häckselaggregat | 33 | Durchgang |
| 5 | Konditioniereinrichtung | 34 | Reflexionsbereich |
| 6 | Nachbeschleuniger | 35 | Tubus |
| 7 | Drehkranz | 36 | Linse |
| 8 | vertikale Drehachse | 37 | Lichtquelle |
| 9 | horizontale Drehachse | 38 | Reflektor |
| 10 | Überladeeinrichtung | 39 | Umlenkeinrichtung |
| 11 | Auswurfklappe | 40 | Lichtleiter |
| 12 | Erfassungseinheit | 41 | elektrische Leiter |
| 13 | Erntegut/Erntegutstrom | 42 | Steuergerät/Spannungsversorgung |
| 14 | Kabel | 43 | Stellmotor |
| 15 | Schutzeinrichtung | 44 | Referenzobjekt |
| 16 | Fahrerkabine | 45 | Lichtstrahl |
| 17 | Detektor | 46 | reflektierter Lichtstrahl |
| 18 | Analyse- und Steuereinrichtung | 47 | Wartungsraum |
| 19 | Bedien- und Anzeigeeinrichtung | 48 | Stellachse |
| 20 | Auswerteeinheit | | |
| 21 | Verstelleinrichtung | | |

## Patentansprüche

1. Landwirtschaftliche Erntemaschine (1) mit einer Messeinrichtung zur Untersuchung eines durch die Erntemaschine (1) geförderten Erntegutstroms (13), wobei die Messeinrichtung zumindest eine am Erntegutstrom (13) angeordnete optische Erfassungseinheit (12), die vom Erntegut (13) reflektiertes Licht (46) erfasst, und eine Auswerteeinheit (20) umfasst, die das Spektrum des erfassten Lichts (46) auswertet, um daraus Eigenschaften des Ernteguts (13) abzuleiten, wobei die Auswerteeinheit (20) an einer Position der Erntemaschine (13) angeordnet ist, welche von mechanischer Beanspruchung durch den Gutstrom (13) und/oder sonstige betriebsbedingte Beschleunigungen weitestgehend entkoppelt ist, und über zumindest einen Lichtleiter (40) mit der Erfassungseinheit (12) verbunden ist,
**dadurch gekennzeichnet, dass** Mittel (21) vorgesehen sind, mit denen sich der Abstand und/oder die Ausrichtung der optischen Erfassungseinheit (12) gegenüber dem zu untersuchenden Gutstrom (13) einstellen lässt.

2. Erntemaschine nach Anspruch 1, **dadurch gekennzeichnet, dass** die Erfassungseinheit (12) als separate Baugruppe ausgeführt ist, die an eine Erntegut (13) führende Komponente (10) der Erntemaschine (1) montierbar ist.

3. Erntemaschine nach Anspruch 1 oder 2, **dadurch gekennzeichnet, dass** die Erfassungseinheit (12) eine Beleuchtungsquelle (37) und eine Optik (35, 36, 39) zur Lenkung von vom Erntegut (13) reflektierten Licht (46) in den Lichtleiter (40) aufweist, wobei der Lichtleiter (40) das reflektierte Licht (46) zu einem in der Auswerteeinheit (20) angeordneten Detektor (17) lenkt.

4. Erntemaschine nach einem der Ansprüche 1 bis 3, **dadurch gekennzeichnet, dass** der Erfassungseinheit (12) zumindest ein Referenzobjekt (44) zugeordnet ist, das zur Kalibrierung der Messeinrichtung dient.

5. Erntemaschine nach einem der Ansprüche 1 bis 4, **dadurch gekennzeichnet, dass** der zumindest eine Lichtleiter (40) zusammen mit elektrischen Leitern (41) zur Stromversorgung und/oder Ansteuerung der Erfassungseinheit (12) in einem gemeinsamen Kabel (14) geführt ist.

6. Erntemaschine nach einem der Ansprüche 1 bis 5, **dadurch gekennzeichnet, dass** ein den Lichtleiter (40) aufnehmendes Kabel (14) zumindest in einem mechanisch besonders hoch beanspruchten Abschnitt von einer Schutzeinrichtung (15) umgeben ist.

7. Erntemaschine nach einem der Ansprüche 1 bis 6, **dadurch gekennzeichnet, dass** die Messeinrichtung mehrere optische Erfassungseinheiten (12) umfasst, die über je zumindest einen Lichtleiter (40) mit einer gemeinsamen Auswerteeinheit (20) verbunden sind, wobei die Erfassungseinheiten (12) in Bezug auf den Erntegutstrom (13) nacheinander und/oder parallel zueinander angeordnet sind.

8. Erntemaschine nach einem der Ansprüche 1 bis 7, **dadurch gekennzeichnet, dass** der Erfassungseinheit (12) zusätzlich eine Kamera zur optischen Erfassung des Ernteguts und zur Bilderzeugung zugeordnet ist.

9. Erntemaschine nach einem der Ansprüche 1 bis 8, **dadurch gekennzeichnet, dass** die Auswerteeinheit (20) in einer zur Steuerung der Erntemaschine (1) durch einen Bediener vorgesehenen Fahrerkabine (16) der Erntemaschine (1) angeordnet ist.

10. Erntemaschine nach einem der Ansprüche 1 bis 8, **dadurch gekennzeichnet, dass** sich die Auswerteeinheit (20) außerhalb der Fahrerkabine (16) befindet und von außen an der Fahrerkabine (16) befestigbar ist.

11. Erntemaschine nach einem der Ansprüche 1 bis 8, **dadurch gekennzeichnet, dass** die Auswerteeinheit (20) in einem Wartungsraum (47) der Erntemaschine (1) angeordnet ist.

12. Erntemaschine nach einem der Ansprüche 1 bis 11, **dadurch gekennzeichnet, dass** es sich bei der Erntemaschine um einen Feldhäcksler (1) mit einer Überladeeinrichtung (10) handelt.

13. Erntemaschine nach einem der Ansprüche 1 bis 12, **dadurch gekennzeichnet, dass** die Auswerteeinheit (20) von einem Betriebszustand, in dem diese an der Fahrerkabine (16) befestigt ist, unter Beibehaltung der Verbindung mit der Erfassungseinheit (12) in einen Wartungszustand bringbar ist, in dem diese an der Überladeeinrichtung (10) befestigt ist.

14. Erntemaschine nach Anspruch 13, **dadurch gekennzeichnet, dass** die Erfassungseinheit (12) an einer Außenwand (32) der Überladeeinrichtung (10) angeordnet ist, um durch einen in der Außenwand (32) vorgesehenen Durchgang (33) vom Erntegut (13) reflektiertes Licht (46) zu erfassen.

15. Erntemaschine nach einem der Ansprüche 1 bis 11, **dadurch gekennzeichnet, dass** es sich bei der Erntemaschine um einen Mähdrescher, Schwader, Wender, Mähwerk, Ladewagen und/oder um eine Ballenpresse handelt.

## Claims

1. An agricultural harvester (1) comprising a measuring device for investigating a crop material flow (13) conveyed through the harvester (1), wherein the measuring device includes at least one optical detection unit (12) which is arranged at the crop material flow (13) and which detects light (46) reflected by the crop material (13), and an evaluation unit (20) which evaluates the spectrum of the detected light (46) to derive therefrom properties of the crop material (13), wherein the evaluation unit (20) is arranged at a position of the harvester (1) which is very substantially decoupled from mechanical loading by the material flow (13) and/or other operationally induced acceleration effects and is connected to the detection unit (12) by way of at least one optical waveguide (40),
**characterised in that** there are provided means (21) with which the spacing and/or the orientation of the optical detection unit (12) can be adjusted with respect to the material flow (13) to be investigated.

2. A harvester according to claim 1 **characterised in that** the detection unit (12) is in the form of a separate assembly which can be mounted to a component (10) of the harvester (1), that guides crop material (13).

3. A harvester according to claim 1 or claim 2 **characterised in that** the detection unit (12) has an illumination source (37) and an optical means (35, 36, 39) for guiding light (46) reflected by the crop material (13) into the optical waveguide (40), wherein the optical waveguide (40) directs the reflected light (46) to a detector (17) arranged in the evaluation unit (20).

4. A harvester according to one of claims 1 to 3 **characterised in that** associated with the detection unit (12) is at least one reference object (44) serving for calibration of the measuring device.

5. A harvester according to one of claims 1 to 4 **characterised in that** the at least one optical waveguide (40) is guided together with electrical conductors (41) in a common cable (14) for the power supply and/or actuation of the detection unit (12).

6. A harvester according to one of claims 1 to 5 **characterised in that** a cable (14) accommodating the optical waveguide (40) is surrounded by a protection device (15) at least in a portion which is particularly highly mechanically loaded.

7. A harvester according to one of claims 1 to 6 **characterised in that** the measuring device includes a plurality of optical detection units (12) which are respectively connected by way of at least one optical waveguide (40) to a common evaluation unit (20), wherein the detection units (12) are arranged in succession and/or parallel to each other in relation to the crop material flow (13).

8. A harvester according to one of claims 1 to 7 **characterised in that** a camera for optical detection of the crop material and for image production is additionally associated with the detection unit (12).

9. A harvester according to one of claims 1 to 8 **characterised in that** the evaluation unit (20) is arranged in a driving cab (16) of the harvester (1), that is provided for control of the harvester (1) by an operator.

10. A harvester according to one of claims 1 to 8 **characterised in that** the evaluation unit (20) is disposed outside the driving cab (16) and can be fixed to the driving cab (16) from the exterior.

11. A harvester according to one of claims 1 to 8 **characterised in that** the evaluation unit (20) is arranged in a maintenance chamber (47) of the harvester (1).

12. A harvester according to one of claims 1 to 11 **characterised in that** the harvester is a forage harvester (1) having a transloading device (10).

13. A harvester according to one of claims 1 to 12 **characterised in that** the evaluation unit (20) can be moved from an operating condition in which it is fixed to the driving cab (16), to a maintenance condition in which it is fixed to the transloading device (10), while maintaining the connection to the detection unit (12).

14. A harvester according to claim 13 **characterised in that** the detection unit (12) is arranged at an outside wall (32) of the transloading device (10) in order to detect light (46) reflected by the crop material (13) through a passage (33) in the outside wall (32).

15. A harvester according to one of claims 1 to 11 **characterised in that** the harvester is a combine harvester, a swather, a turning device, a mowing mechanism, a loading truck and/or a bale press.

## Revendications

1. Machine de récolte agricole (1) comprenant un dispositif de mesure pour analyser un flux de produit de récolte (13) transporté à travers la machine de récolte (1), le dispositif de mesure comprenant au moins une unité de détection optique (12), qui est disposée à côté du flux de produit de récolte (13) et qui détecte la lumière (46) réfléchie par le produit de récolte (13), et une unité d'analyse (20) qui analyse le spectre de la lumière (46) détectée pour en déduire des propriétés du produit de récolte (13), l'unité d'analyse (20) étant disposée à une position de la machine de récolte (13) qui est très largement découplée de la sollicitation mécanique par le flux de produit (13) et/ou des autres accélérations dues au fonctionnement, et étant reliée à l'unité de détection (12) par au moins un guide de lumière (40),
**caractérisée en ce qu'**il est prévu des moyens (21) qui permettent de régler la distance et/ou l'orientation de l'unité de détection optique (12) par rapport au flux de produit (13) à analyser.

2. Machine de récolte selon la revendication 1, **caractérisée en ce que** l'unité de détection (12) est réalisée sous la forme d'un sous-ensemble séparé qui peut être monté sur un composant (10) de la machine de récolte (1) qui conduit un produit de récolte (13).

3. Machine de récolte selon la revendication 1 ou la revendication 2, **caractérisée en ce que** l'unité de détection (12) comprend une source d'éclairage (37) et une optique (35, 36, 39) pour guider la lumière (46) réfléchie par le produit de récolte (13) dans le guide de lumière (40), le guide de lumière (40) guidant la lumière (46) réfléchie vers un détecteur (17) disposé dans l'unité d'analyse (20).

4. Machine de récolte selon l'une des revendications 1 à 3, **caractérisée en ce qu'**au moins un objet de référence (44), qui sert à étalonner le dispositif de mesure, est associé à l'unité de détection (12).

5. Machine de récolte selon l'une des revendications 1 à 4, **caractérisée en ce que** ledit au moins un guide de lumière (40) est conduit dans un câble commun (14) avec des conducteurs électriques (41) pour l'alimentation électrique et/ou la commande de l'unité de détection (12).

6. Machine de récolte selon l'une des revendications 1 à 5, **caractérisée en ce que**, au moins dans une partie particulièrement sollicitée mécaniquement, un câble (14) recevant le guide de lumière (40) est entouré par un dispositif de protection (15).

7. Machine de récolte selon l'une des revendications 1 à 6, **caractérisée en ce que** le dispositif de mesure comprend plusieurs unités de détection optique (12) qui sont reliées chacune par au moins un guide de lumière (40) à une unité d'analyse (20) commune, les unités de détection (12) étant disposées les unes après les autres et/ou parallèlement les unes aux autres par rapport au flux de produit de récolte (13).

8. Machine de récolte selon l'une des revendications 1 à 7, **caractérisée en ce qu'**une caméra pour la détection optique du produit de récolte et pour la production d'images est associée en plus à l'unité de détection (12).

9. Machine de récolte selon l'une des revendications 1 à 8, **caractérisée en ce que** l'unité d'analyse (20) est disposée dans une cabine de conduite (16) de la machine de récolte (1) prévue pour la commande de la machine de récolte (1) par un opérateur.

10. Machine de récolte selon l'une des revendications 1 à 8, **caractérisée en ce que** l'unité d'analyse (20) se trouve à l'extérieur de la cabine de conduite (16) et peut être fixée sur la cabine de conduite (16) par l'extérieur.

11. Machine de récolte selon l'une des revendications 1 à 8, **caractérisée en ce que** l'unité d'analyse (20) est disposée dans un compartiment d'entretien (47) de la machine de récolte (1).

12. Machine de récolte selon l'une des revendications 1 à 11, **caractérisée en ce que** la machine de récolte est une ensileuse (1) équipée d'un dispositif de transfert (10).

13. Machine de récolte selon l'une des revendications 1 à 12, **caractérisée en ce que**, tout en maintenant la liaison avec l'unité de détection (12), l'unité d'analyse (20) peut être amenée d'un état de fonctionnement, où elle est fixée à la cabine de conduite (16), dans un état d'entretien où elle est fixée au dispositif de transfert (10).

14. Machine de récolte selon la revendication 13, **caractérisée en ce que** l'unité de détection (12) est disposée sur une paroi extérieure (32) du dispositif de transfert (10) pour détecter la lumière (46) réfléchie par le produit de récolte (13) à travers une ouverture (33) ménagée dans la paroi extérieure (32).

15. Machine de récolte selon l'une des revendications 1 à 11, **caractérisée en ce que** la machine de récolte est une moissonneuse-batteuse, une andaineuse, une faneuse, une faucheuse, une remorque autochargeuse et/ou une presse à balles.
